# EUROPÄISCHE PATENTSCHRIFT

(11) **EP 0 895 007 B1**
(45) Veröffentlichungstag und Bekanntmachung des Hinweises auf die Patenterteilung: **08.12.1999**
(21) Anmeldenummer: 98108687.9
(22) Anmeldetag: 13.05.1998
(51) Int. Cl.: F16H 61/24, F16H 63/20

(54) **Schaltkulisse für einen an einer Schaltwelle angeordneten Schaltstift eines Wechselgetriebes**
Shift gate for shift finger arranged on shift shaft of a transmission
Coulisse pour doigt de commande monté sur un arbre de commande changement de vitesses

(30) Priorität: 05.06.1997 DE 19723507
(43) Veröffentlichungstag der Anmeldung: 03.02.1999
(73) Patentinhaber: Ford Global Technologies, Inc., A subsidiary of Ford Motor Company, Dearborn, Michigan 48126 (US)
(72) Erfinder: Wollschlaeger, Gerd, 5063 Overath 2 (DE)
(74) Vertreter: Messulam, Alec Moses

(56) Entgegenhaltungen:
- DE-A- 3 913 269
- US-A- 5 036 721
- PATENT ABSTRACTS OF JAPAN vol. 8, no. 12 (M-269) [1449] , 19. Januar 1984 & JP 58 174760 A (NISSAN JIDOSHA K.K.), 13. Oktober 1983

## Beschreibung

Die Erfindung bezieht sich auf eine Schaltkulisse für einen an einer Schaltwelle angeordneten Schaltstift eines Wechselgetriebes der im Oberbegriff des Patentanspruches 1 erläuterten Art.

Aus der DE-A-3 913 269, siehe insbesondere die Figuren 2 und 3, ist eine Schaltkulisse für einen an einer Schaltwelle angeordneten Schaltstift eines Wechselgetriebes der im Oberbegriff erläuterten Art bekannt.

Der an der Schaltwelle angeordnete Schaltstift wirkt hierbei mit Schlitzen in einer ebenen Schaltkulisse zusammen, die im Getriebegehäuse lagefest angeordnet ist.

Die bekannte Schaltkulisse weist den Nachteil auf, daß auch für den Fall, daß sie z.B. zur Verringerung des Platzbedarfes kreisbogenförmig gekrümmt ausgebildet ist, sie doch einen bestimmten Raum innerhalb des Getriebegehäuses beansprucht.

Die Aufgabe der Erfindung ist es, eine Schaltkulisse der im Oberbegriff des Patentanspruches 1 erläuterten Art derart auszubilden, daß sie mit noch geringerem Platz- und Materialaufwand ausgeführt werden kann.

Gemäß der Erfindung wird diese Aufgabe gelöst, indem eine Schaltkulisse für einen an einer Schaltwelle angeordneten Schaltstift eines Wechselgetriebes, der im Oberbegriff des Patentanspruches 1 erläuterten Art, die im Kennzeichenteil des Patenanspruches 1 aufgezeigten Merkmale aufweist.

Dadurch, daß der Schaltstift über einen radialen Arm parallel zur Schaltwelle angeordnet ist und axiale Abschnitte von unterschiedlichen Durchmessern aufweist und die Schaltkulisse in einer Radialebene zur Schaltwelle angeordnet ist und als ebene Platte mit einem bogenförmigen Schlitz von in Umfangsrichtung unterschiedlichen Breiten ausgebildet ist, kann eine sehr raum- und materialsparende Schaltkulisse geschaffen werden.

In den weiteren Ansprüchen sind unterschiedliche Einzelheiten und Ausführungsformen der erfindungsgemäßen Lösung aufgezeigt.

Die Erfindung wird anhand von in den beiliegenden Zeichnungen gezeigten Ausführungsformen der Erfindung näher erläutert. Es zeigt:
- Fig. 1: eine Ansicht auf eine erfindungsgemäße Schaltkulisse in Richtung der Achse der Schaltwelle;
- Fig. 2: eine Seitenansicht der Ausführungsform nach Fig. 1 mit einem Schnitt durch die Schaltkulisse entlang der Linie II-II;
- Fig. 3: eine andere Ausführungsform der Schaltkulisse gemäß der Erfindung in Ansicht entlang der Achse der Schaltwelle und
- Fig. 4: eine Seitenansicht der Schaltkulisse nach Fig. 3 mit einem Schnitt durch die Schaltkulisse entlang der Linie IV-IV.
- Fig. 5: eine ausgeführte Ausführungsform der Schaltkulisse gemäß der Erfindung in Ansicht entlang der Achse der Schaltwelle mit einer Rückwärtsgangsperre und
- Fig. 6: eine Seitenansicht der Schaltkulisse nach Fig. 5 mit den Teilen der Rückwärtsgangsperre.

Die Schaltkulisse für einen an einer Schaltwelle angeordneten Schaltstift eines Wechselgetriebes ist in den beiliegenden Zeichnungen im wesentlichen prinzipiell dargestellt, d.h., es sind die entsprechenden Getrieberäder und das Getriebegehäuse weggelassen.

Auf einer Schaltwelle 1 ist eine Nabe 2 mit einem radialen Arm 3, z.B. über einen Kerbstift 4 lagefest angeordnet.

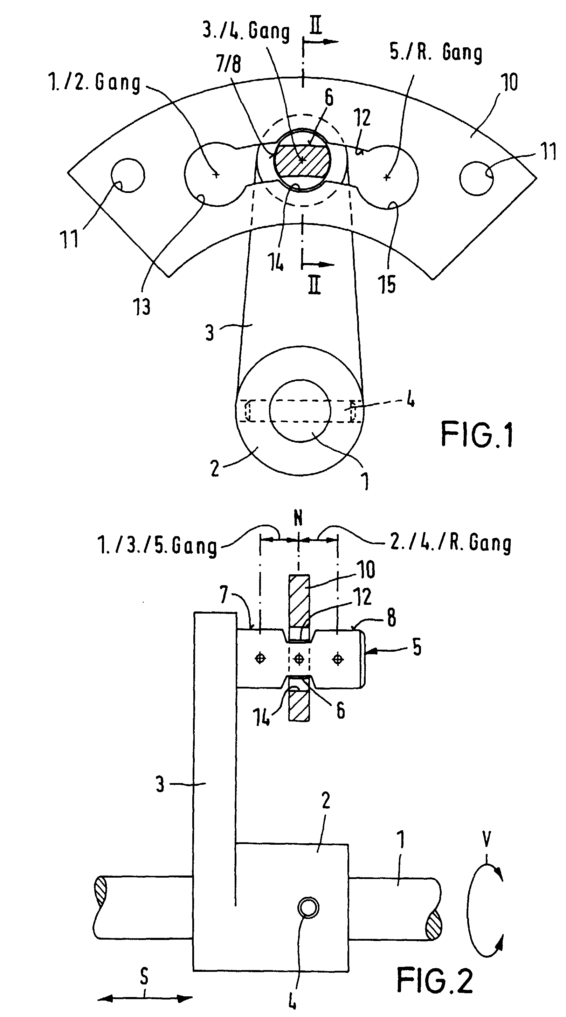

Das freie Ende des radialen Armes 3 ist mit einem sich parallel zur Schaltwelle 1 erstreckenden Schaltstift 5 versehen, der zumindest drei axiale Abschnitte mit unterschiedlichen Querschnitten 6, 7 und 8 aufweist, wobei der Querschnitt 6 keine kreisrunde Form aufweist, sondern wie in Fig. 1 schraffiert dargestellt, abgeflacht ist und die Neutralstellung N innerhalb des Schaltschemas darstellt. Dadurch erhöht sich die Stabilität des Schaltstiftes und gleichzeitig ergibt sich in der Schaltgasse für den 1/2- bzw. 5/R-Gang ein seitlicher Anschlag. Die Querschnitte 7 und 8 des Schaltstiftes 5 weisen eine kreisrunde Form auf und bestimmen die Einrücklagen innerhalb des Schaltschemas.

In Fig. 2 ist durch die Pfeile V und S die Richtung der radialen Vorwählbewegung und die Richtung der axialen Einrückbewegung der Schaltwelle 1 aufgezeigt. Bei dieser Ausführungsform wird durch ein radiales Verschwenken der Schaltwelle 1 vorgewählt und durch ein axliales Verschieben der Schaltwelle 1 werden die Gänge eingerückt.

Eine Schaltkulisse 10 in Form einer ebenen Platte ist in einer Radialebene zur Schaltwelle 1 angeordnet und kann z.B. über zwei Bohrungen 11 über geeignete Befestigungsmittel lagefest im Getriebegehäuse festgelegt werden.

Die Schaltkulisse 10 weist einen bogenförmigen Schlitz 12 auf, der in Umfangsrichtung Abschnitte 13, 14 und 15 von größerer Breite aufweist.

Befindet sich der Schaltstift 5 mit seinem mittleren Querschnitt 6 von geringerer Dicke in der Radialebene der Schaltkulisse 10, so kann die Schaltwelle 1 zum Ausführen einer Vorwählbewegung V radial verschwenkt werden. Sobald sich der Schaltstift 5 in einem der Abschnitte 13, 14 und 15 befindet, so kann die Schaltwelle 1 axial bewegt werden, um eine Einrückbewegung S auszuführen.

Die Abschnitte 13, 14 und 15 des Schlitzes 12 der Schaltkulisse 10 bestimmen somit die Schaltgassen für den 1./2. Gang, den 3./4. Gang und den 5. Gang und den Rückwärtsgang.

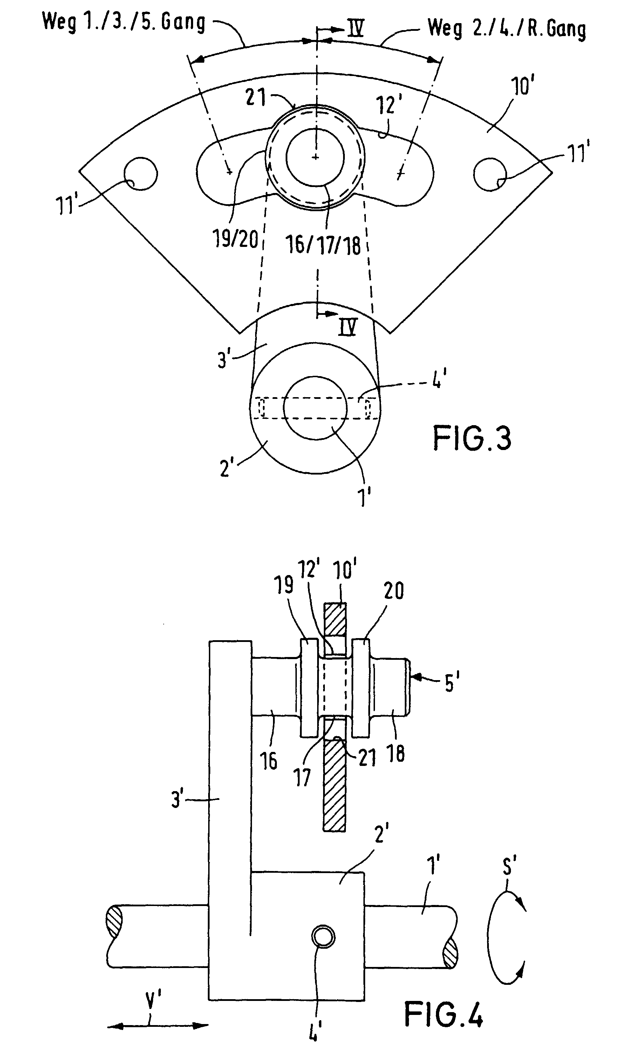

In den Fig. 3 und 4 ist eine weitere Ausführungsform einer erfindungsgemäßen Schaltkulisse für einen an einer Schaltwelle angeordneten Schaltstift eines Wechselgetriebes gezeigt, bei der übereinstimmende Teile der Vorrichtung mit den gleichen, nur mit einem Strich-Index versehenen Bezugszeichen versehen sind.

Die Schaltwelle 1' ist hierbei in dieser Ausführungsform zum Vorwählen einer Schaltgasse in Richtung des Pfeiles V' verschiebbar und zum Einrücken eines Ganges in Richtung des Pfeiles S' radial verschwenkbar.

Auf der Schaltwelle 1' ist wieder über eine Nabe 2' ein radialer Arm 3' über einen Kerbstift 4' festgelegt. Am freien Ende des radialen Armes 3' ist ein Schaltstift 5' angeordnet, der mehrere axiale Abschnitte mit unterschiedlichen Durchmessern aufweist, wobei drei im Durchmesser kleinere Abschnitte 16, 17 und 18 vorgesehen sind, die durch zwei scheibenartige Verdikkungen 19 und 20 voneinander getrennt sind.

Die Schaltkulisse 10' ist wieder als ebene Platte in einer Radialebene zur Schaltwelle 1' angeordnet und weist einen bogenförmigen Schlitz 12' auf, der bis auf einen mittleren Abschnitt 21 von größerer Breite in seiner Erstreckung nach links und rechts eine geringere Breite aufweist, die mit den kleineren axialen Abschnitten 16, 17, und 18 am Schaltstift 5 übereinstimmt.

Befindet sich die Schaltwelle 1' mit ihrem radialen Arm 3' in ihrer aus Fig. 3 ersichtlichen mittleren Lage, in der die scheibenartigen Verdickungen 19 und 20 in Übereinstimmung mit dem breiteren Abschnitt 21 des bogenförmigen Schlitzes 12' der Schaltkulisse 10' stehen, so kann durch axiale Verlagerung der Schaltwelle 1' entlang des Pfeiles V' eine Vorwahl der Schaltgassen für den 1./2. Gang, den 3./4. Gang und den 5. und Rückwärtsgang erfolgen.

Ist die entsprechende Schaltgasse ausgewählt, so kann durch radiales Schwenken der Schaltwelle 1' entlang des Pfeiles S' eine Einrückbewegung ausgeführt werden, da sich die kleineren Abschnitte 16, 17 und 18 des Schaltstiftes 5' entlang der seitlichen, eine geringe Breite aufweisenden Bereiche des bogenförmigen Schlitzes 12' der Schaltkulisse in die jeweils linke oder rechte radiale Endlage bewegen können.

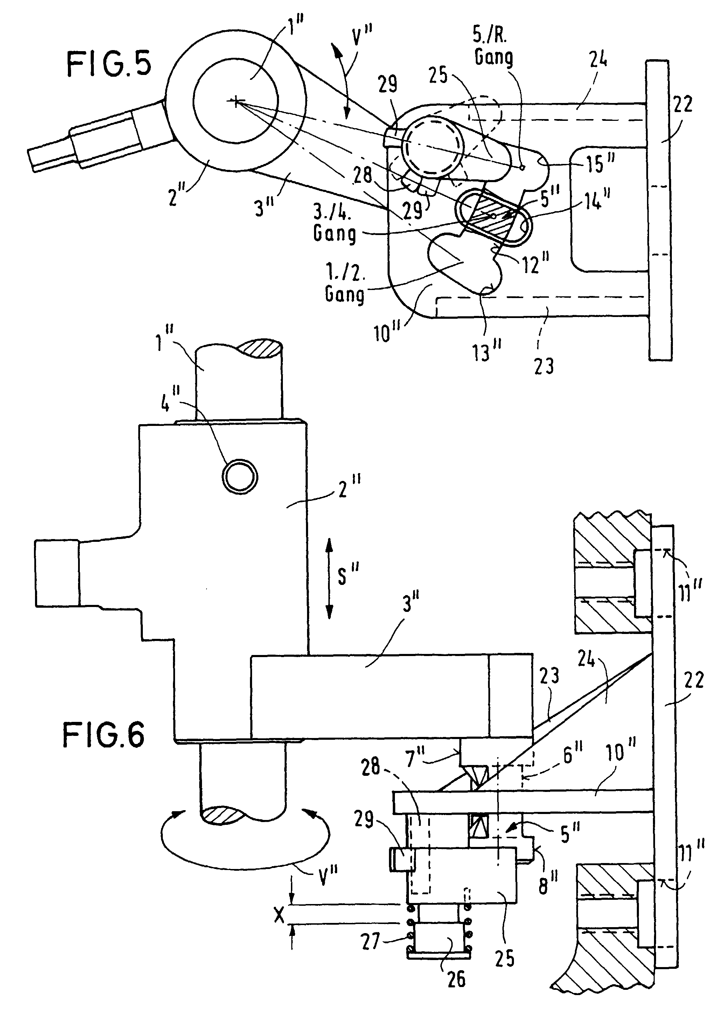

In den Figuren 5 und 6 ist eine ausgeführte, an ein bestehendes Getriebe angepaßte Ausführungsform der erfindungsgemäßen Schaltkulisse gezeigt, bei der gleiche Teile mit den gleichen, mit einem Doppelstrich-Index versehenen Bezugszeichen bezeichnet sind. Die Schaltwelle mit 1'' bezeichnet, ist hierbei zum Vorwählen einer Schaltgasse in Richtung des Pfeiles V'' radial verschwenkbar und zum Einrücken eines Ganges in in Richtung des Pfeiles S'' axial verschiebbar.

Auf der Schaltwelle 1'' ist wieder über eine Nabe 2'', ein radialer Arm 3'' über einen Kerbstift 4'' festgelegt. Am freien Ende des radialen Armes 3'' ist ein Schaltstift 5'' angeordnet, der zumindest drei axiale Abschnitte mit unterschiedlichen Querschnitten 6'', 7'' und 8'' aufweist, wobei der Abschnitt 6'' die Neutralstellung N innerhalb des Schaltschemas darstellt, während die Abschnitte 7'' und 8'' die Einrücklagen innerhalb des Schaltschemas bezeichnen.

Eine Schaltkulisse 10'' in Form einer ebenen Platte ist in einer Radialebene zur Schaltwelle 1'' angeordnet und kann hier über zwei Bohrungen 11'' am Getriebegehäuse festgelegt werden, wobei hier die Schaltkulisse 10'' an einer Grundplatte 22 angeordnet und über dreieckige Seitenwangen 23 und 24 abgestützt ist.

Die Schaltkulisse 10'' weist einen bogenförmigen Schlitz 12'' auf, der in Umfangsrichtung Abschnitte 13'', 14'' und 15'' von größerer Breite aufweist.

Befindet sich der Schaltstift 5'' mit seinem mittleren Abschnitt 6'' von geringerem Querschnitt in der Radialebene der Schaltkulisse 10'',so kann die Schaltwelle 1'' zum Ausführen einer Vorwählbewegung V'' radial verschwenkt werden. Sobald sich der Schaltstift 5'' in einem der Abschnitte 13'', 14'' und 15'' befindet, so kann die Schaltwelle 1'' axial bewegt werden, um eine Einrückbewegung S'' auszuführen.

Die Abschnitte 13'', 14'' und 15'' des bogenförmigen Schlitzes 12'' der Schaltkulisse 10'' bestimmen somit die Schaltkulissen für den 1./2. Gang, den 3./4. Gang und den 5. Gang und den Rückwärtsgang.

Da bei dieser Auslegung des Schaltgetriebes der 5. Gang und der Rückwärtsgang in der gleichen Schaltgasse liegen, muß in an sich bekannter Weise eine Rückwärtsgangsperre vorgesehen werden, die ein unbeabsichtigtes Einrücken des Rückwärtsganges bei einer Schaltbewegung aus dem 5. Gang in Richtung des 4. Ganges vermeidet.

Die Rückwärtsgangsperre besteht im wesentlichen aus einer Sperrklinke 25, die auf einem zylindrischen Bolzen 26, der an der Schaltkulisse 10'' befestigt ist und mehrere Absätze aufweist und sowohl axial verschiebbar, als auch radial verschwenkbar ist. Durch eine Schraubenfeder 27 wird die Sperrklinke 25 in einer definierten Ruhelage gehalten. Ein Anschlagselement 28 (in seiner Längenausdehnung in Fig. 6 gestrichelt gezeigt) ist fest mit dem Bolzen 26 verbunden und Anschlagsnasen 29 sind fest mit der Sperrklinke 25 verbunden.

Diese Elemente gewährleisten erstens eine definierte radiale Ruhelage der Sperrklinke und zweitens eine definierte maximale Auslenkung der Sperrklinke aus der Ruhelage.

Die Funktion der Rückwärtsgangsperre wird nachfolgend erläutert. Wird der Schaltstift 5'', der sich in seiner axialen Neutrallage befindet, durch radiales Verschwenken in die Schaltgasse des 5. Ganges und des Rückwärtsganges geschwenkt, so bewegt er die Sperrklinke 25 aus ihrer in vollen Linien gezeichneten Neutrallage in ihre radiale Endlage, die in gestrichelten Linien gezeichnet ist. Die Schrauben-Torsionsfeder 27 wird dabei gespannt und übt auf die Sperrklinke 25 eine Torsionskraft aus. Wird nun der Schaltstift 5'' in Richtung Einlegen des 5. Ganges bewegt, so springt die Sperrklinke 25 in ihre Ausgangslage zurück.

Wird nachfolgend der Schaltstift 5'' beim Ausrücken des 5. Ganges axial in Richtung des Rückwärtsganges bewegt, so trifft die Stirnseite des Schaltstiftes 5'' auf die entsprechende Fläche der Sperrklinke 25 und nimmt diese in axialer Richtung mit bis sie am Absatz am Bolzen 26 anschlägt und somit das Schalten vom 5. Gang unmittelbar in den Rückwärtsgang blokkiert. Der Schaltstift 5'' läßt sich jedoch aus dieser Position radial in Richtung der Schaltgasse für den 3. und 4. Gang bewegen, so daß eine nachfolgende Rückschaltung in den 4. Gang erfolgen kann.

Soll der Rückwärtsgang eingelegt werden, so führt der Schaltstift 5'' eine radiale Schwenkbewegung aus, um die Schaltgasse des 5. Ganges und des Rückwärtsganges anzuwählen. Dabei wird die Sperrklinke 25 aus ihrer Ruhelage in ihre verschwenkte Endlage gedreht und hierbei wieder das Schrauben-Torsionsfederelement 27 vorgespannt. Der Schaltstift 5'' kann nunmehr in axialer Richtung zum Einrücken des Rückwärtsganges bewegt werden, was durch die Sperrklinke 25 nun nicht behindert wird. Das Ausrücken des Rückwärtsganges erfolgt in umgekehrter Reihenfolge.

Die Schrauben-Torsionsfeder 27 ist einerseits am Bolzen 26 und andererseits an der Sperrklinke 25 derart befestigt, daß es auf die Sperrklinke 25 sowohl eine axiale als auch eine radiale Federkraft ausübt und ein axiales Ausweichen der Sperrklinke 25 über den Weg X zuläßt.

Selbstverständlich kann der Fachmann für die in den Figuren 3 und 4 gezeigte andere Ausführungsform der erfindungsgemäßen Schaltkulisse auch eine entsprechend angepaßte andere Rückwärtsgangsperre entwickeln.

## Patentansprüche

1. Schaltkulisse für einen an einer Schaltwelle (1) angeordneten Schaltstift (5) eines Wechselgetriebes, die im Getriebegehäuse lagefest angeordnet ist und die mit dem Schaltstift (5) diesen in Schlitzen führend zusammenwirkt,
**dadurch gekennzeichnet**, daß
- der Schaltstift (5) über einen radialen Arm (3) parallel zur Schaltwelle (1) angeordnet ist und axiale Abschnitte (6, 7 und 8) von unterschiedlichen Querschnitte aufweist und
- die Schaltkulisse (10) als eine ebene Platte in einer Radialebene zur Schaltwelle (1) angeordnet ist und einen bogenförmigen Schlitz (12) aufweist, der in Umfangsrichtung Abschnitte (13, 14 und 15) von unterschiedlicher Breite aufweist.

2. Schaltkulisse nach Anspruch 1,
**dadurch gekennzeichnet,** daß
- der Schaltstift (5) mit axialen Abschnitten von unterschiedlichen Querschnitten als ein im wesentlichen zylindrischer Schaltstift (5) mit einem mittleren Abschnitt (6) mit einem Querschnitt geringerer Dicke ausgebildet ist, der die Neutral- oder Vorwählebene bestimmt und
- der bogenförmige Schlitz (12) mit Abschnitten unterschiedlicher Breite als Bogenschlitz mit drei kreisförmigen Erweiterungen (13, 14 und 15) ausgebildet ist, die die Schaltgassen bestimmen.

3. Schaltkulisse nach Anspruch 1,
**dadurch gekennzeichnet**, daß
- der Schaltstift (5') mit Abschnitten von unterschiedlichen Querschnitten als ein im wesentlichen zylindrischer Schaltstift mit zwei im Abstand zueinander angeordneten scheibenförmigen Verdickungen (19 und 20) ausgebildet ist und
- der bogenförmige Schlitz (12') mit Abschnitten unterschiedlicher Breite als Bogenschlitz mit nur einer, zentralen Erweiterung (21) ausgebildet ist, der die Neutral- oder Vorwählebene bestimmt.

4. Schaltkulisse nach den Ansprüchen 1 bis 3,
**dadurch gekennzeichnet**, daß
- der Schaltstift (5, 5' oder 5'') einen von der Zylinderform abweichenden Querschnitt aufweist und
- der bogenförmige Schlitz (12, 12' oder 12'') mit Abschnitten unterschiedlicher Breite ausgebildet ist, wobei die Erweiterungen (13, 14 und 15 bzw. 13'', 14'' und 15'') dem Querschnitt des Schaltstiftes entsprechend angepaßt sind.

5. Schaltkulisse nach den Ansprüchen 1 und 2,
**dadurch gekennzeichnet**, daß
- an der Schaltkulisse (10'') eine Sperrklinke 25 auf einem Bolzen (26) entgegen der Kraft eines Schrauben-Torsionsfdeder (27) begrenzt axial verlagerbar und über einen Anschlag (28) am Bolzen (26) und Anschläge (29) an der Sperrklinke (25) begrenzt radial verschwenkbar ist, die eine Rückwärtsgangsperre bildet, die ein unmittelbares Schalten vom 5. Gang in den Rückwärtsgang verhindert.

## Claims

1. Gear shifting gate for an actuating bolt (5) which is positioned on a selector shaft (1) of a gear change box, arranged in a fixed position in a gearbox casing and collaborating with the actuating bolt, guiding this in slots,
**characterised in that**
the actuating bolt (5) is positioned parallel to the selector shaft (1) via a radial arm (3) and has axial sections (6, 7 and 8) of differing cross-section and
the gear shifting gate (10) is arranged as a flat plate on a radial plane relative to the selector shaft (1) and has a arc-shaped slot (12) which has sections (13, 14 and 15) of different width around its circumference.

2. Gear shifting gate according to claim 1,
**characterised in that**
the actuating bolt (5) with axial sections of differing cross-section is configured as an essentially cylindrical actuating bolt (5) with a central section (6) with a cross-section of smaller thickness, which determines the neutral or preselection level and
the arc-shaped slot (12) with sections of differing width is configured as arc slot with three circular extensions (13, 14 and 15) which determine the shift passages.

3. Gear shifting gate according to claim 1,
**characterised in that**
the actuating bolt (5') with sections of differing cross-section is configured as an essentially cylindrical actuating bolt with two spaced, disc-shaped thick points and
the arc-shaped slot (12') with sections of differing width is configured as arc slot with only one central extension (21) which determines the neutral or preselection level.

4. Gear shifting gate according to claims 1 to 3,
**characterised in that**
the actuating bolt (5, 5' or 5") has a cross section which deviates from the cylindrical form and
the arc-shaped slot (12, 12' or 12") is configured with sections of differing width, the extensions (13, 14 and 15 or 13", 14" and 15") being appropriately coordinated to the cross-section of the actuating bolt.

5. Gear shifting gate according to claims 1 and 2,
**characterised in that**
on the gear shifting gate (10") a locking pawl 25 is axially displaceable, within limits, on a pin (26) against the force of a helical torsion spring (27) and can be pivoted radially, within limits, via a stop (28) on the pin (26) and stops (29) on the locking pawl (25), this forming a reverse gear lock-out which prevents a direct shift from 5^{th} gear to reverse gear.

## Revendications

1. Coulisse de guidage pour un axe de commande (5) d'une boîte de vitesses, disposé sur un arbre (1) de changement de vitesses, qui est disposée en position fixe dans le carter de boîte est qui coopère avec l'axe de commande (5) en guidant ce dernier dans des fentes,
**caractérisée** en ce que
- l'axe de commande (5) est disposé parallèlement à l'arbre (1) de changement de vitesses au moyen d'un bras radial (3), et présente des parties axiales (6, 7 et 8) de sections différentes, et
- la coulisse de guidage (10) est disposée sous forme de plaque plane dans un plan radial à l'arbre (1) de changement de vitesses, et comporte une fente courbe (12) qui présente, en direction circonférentielle, des parties (13, 14 et 15) de largeurs différentes.

2. Coulisse de guidage selon la revendication 1, **caractérisée** en ce que
- l'axe de commande (5) doté de parties axiales de sections différentes est réalisé sous forme d'axe de commande (5) essentiellement cylindrique, doté d'une partie médiane (6) avec une section de moindre épaisseur, qui définit le plan neutre ou plan de présélection, et
- la fente courbe (12) dotée de parties de largeurs différentes est réalisée sous forme de fente courbe dotée de trois parties élargies circulaires (13, 14 et 15), qui définissent les voies de changement de vitesses.

3. Coulisse de guidage selon la revendication 1, **caractérisée** en ce que
- l'axe de commande (5') doté de parties de sections différentes est réalisé sous forme d'axe de commande essentiellement cylindrique, doté de deux parties épaissies (19 et 20) en forme de disques, disposées à distance l'une de l'autre, et
- la fente courbe (12') dotée de parties de largeurs différentes est réalisée sous forme de fente courbe dotée d'une seule partie élargie centrale (21), qui définit le plan neutre ou plan de présélection.

4. Coulisse de guidage selon les revendications 1 à 3, **caractérisée** en ce que
- l'axe de commande (5, 5' ou 5") présente une section divergeant de la forme cylindrique, et
- la fente courbe (12, 12' ou 12") est dotée de parties de largeurs différentes, les parties élargies (13, 14 et 15 ou 13", 14" et 15") étant adaptées à la section de l'axe de commande.

5. Coulisse de guidage selon les revendications 1 et 2, **caractérisée** en ce que, sur la coulisse de guidage (10"), un cliquet de verrouillage (25) est disposé à déplacement axial limité sur une broche (26) à l'encontre de la force d'un ressort de torsion à boudin (27), et à pivotement radial limité au moyen d'une butée (28) sur la broche (26) et de butées (29) sur le cliquet de verrouillage (25), le cliquet de verrouillage constituant un verrouillage de marche arrière, qui empêche un passage direct de la 5ème à la marche arrière.
